# EUROPEAN PATENT SPECIFICATION

(11) **EP 3 304 880 B1**
(45) Date of publication and mention of the grant of the patent: **13.04.2022**
(21) Application number: 16727608.8
(22) Date of filing: 26.05.2016
(51) Int. Cl.: H04M 3/56, G10L 21/02, H04M 9/08, H04N 7/14, H04N 7/15

(54) **AUDIO SIGNAL PROCESSING BASED ON REMOTE USER CONTROL**
AUDIOSIGNALVERARBEITUNG AUF DER BASIS DER STEUERUNG VON FERNBENUTZERSTEUERUNG
TRAITEMENT DE SIGNAL AUDIO BASÉ SUR UNE COMMANDE À DISTANCE PAR DES UTILISATEURS

(30) Priority: 29.05.2015 CN 201510290470; 17.06.2015 US 201562181043 P
(43) Date of publication of application: 11.04.2018
(73) Proprietor: Dolby Laboratories Licensing Corporation, San Francisco, CA 94103 (US)
(72) Inventor: SHI, Dong, Shanghai 200434 (CN); SUN, Xuejing, Beijing 100022 (CN); SHUANG, Zhiwei, Beijing 100020 (CN)
(74) Representative: Dolby International AB Patent Group Europe
(86) International application number: PCT/US2016/034413
(87) International publication number: WO 2016/196212

(56) References cited:
- US-A1- 2004 257 432
- US-A1- 2006 245 378
- US-A1- 2008 095 077
- US-A1- 2011 157 299
- US-A1- 2012 069 134
- US-B1- 6 850 496
- US-B1- 7 843 486

## Description

### CROSS-REFERENCE TO RELATED APPLICATIONS

This application claims priority to Chinese Patent Application No. 201510290470.0, filed May 29, 2015, and claims the benefit of United States Provisional Patent Application No. 62/181,043, filed June 17, 2015.

### TECHNOLOGY

Example embodiments disclosed herein generally relate to audio signal processing, and more specifically, to methods and devices for audio signal processing with remote user control information.

### BACKGROUND

In audio communication systems such as teleconference systems or voice over Internet Protocol (VoIP) systems, multiple devices can share a captured audio signal among each other via wireless or wired connections. A sender device captures an audio signal from local human speakers by a microphone or microphone array. Generally the sender device will employ various processing operations on the captured audio signal before sending it to one or more remote receiver devices. Examples of such processing operations include, but are not limited to, noise suppression, speech enhancement, equalization, echo cancellation, and audio coding.

However, since the sender device has no prior knowledge about the receiver devices, the context of the receiver devices, or the preferences of users of the receiver devices, the sender device usually applies a pre-defined set of processing operations to the captured audio signal. If the processed audio signal is not adapted to the remote receiver devices or the users of the receiver devices, the playback experience at the receiver sides will degrade. For example, it is possible that a remote user does not like the way in which the background noise of the audio is removed. Even so, however, the user has no way to control the noise suppression in the sender device.

One possible solution is to send the raw audio signal to the receiver devices, such that the audio signal is locally processed by each of the receiver devices according to the local context. However, the receiver devices have less knowledge about the captured audio. As a result, the accuracy of audio signal processing might be somewhat decreased. Moreover, the transmissions of raw audio signal usually consume more network bandwidth, which potentially reduces the audio transmission rate and the overall system performance. In addition, even if the audio signal is processed at the receiver devices, the users are still unable to have direct control of the audio processing.

Document US 2004/257432 proposes a system and method of directing pickup of media content by way of user input in a videoconference environment. Hereby, a user is capable of observing a video feed and from that select a region of interest on which the camera and/or microphones should focus on. Documents US 2008/095077 and US 6,850,496 relate to assigning specific perceived arrival directions of each participant's voice in a voice conference call, in order to create a perception spatial separation between conference callers in setups using stereo capable phones. Document US 2012/069134 discloses a system utilizing a focus point module which retrieves all the audio signals in the session and performs audio processing on a subset of these signals based on predefined criteria.

### SUMMARY

Example embodiments disclosed herein propose a solution for processing an audio signal based on remote user control information.

In one aspect, example embodiments disclosed herein provide a method of processing an audio signal according to claim 1.

Embodiments in this regard further provide a corresponding computer program product.

In a second aspect, example embodiments disclosed herein provide a method of processing an audio signal according to claim 6.

Embodiments in this regard further provide a corresponding

In a third aspect, example embodiments disclosed herein provide a device according to claim 9.

In a fourth aspect, example embodiments disclosed herein provide a device according to claim 13.

Through the following description, it would be appreciated that in accordance with example embodiments disclosed herein, a remote receiver device is allowed to control processing of an audio signal in a sender device by transmitting to the sender device a control parameter specifying a user preference, such that the sender device processes the audio signal based on the received control parameter. The processed audio signal is then transmitted to the receiver device. Therefore, a user of the remote receiver device is able to have direct control of the audio signal processing via user interaction at the local device, which can significantly improve user experience. In addition, the audio signal remains being processed at the sender side, which can maintain the accuracy of the audio signal processing since the sender device that captures the audio signal has more knowledge about the audio signal. On the other hand, transmission of the processed audio signal rather than the raw audio signal between the sender device and the receiver device will potentially consume less network bandwidth. Other advantages achieved by example embodiments disclosed herein will become apparent through the following descriptions.

### DESCRIPTION OF DRAWINGS

Through the following detailed description with reference to the accompanying drawings, the above and other objectives, features and advantages of example embodiments disclosed herein will become more comprehensible. In the drawings, several example embodiments disclosed herein will be illustrated in an example and non-limiting manner, wherein:
FIG. 1 is a block diagram of an audio communication system involving an audio sender device and an audio receiver device in accordance with one example embodiment disclosed herein;
FIG. 2 is a schematic diagram illustrating a user graphic interface for controlling processing parameters at a receiver device in accordance with one example embodiment disclosed herein;
FIG. 3 is a block diagram of an audio communication system involving an audio sender device and multiple audio receiver devices in accordance with one example embodiment disclosed herein;
FIG. 4 is a flowchart of a method of processing an audio signal in an audio sender device in accordance with an example embodiment disclosed herein;
FIG. 5 is a flowchart of a method of processing an audio signal in an audio receiver device in accordance with an example embodiment disclosed herein; and
FIG. 6 illustrates a block diagram of an example computer system suitable for implementing example embodiments disclosed herein.

Throughout the drawings, the same or corresponding reference symbols refer to the same or corresponding parts.

### DESCRIPTION OF EXAMPLE EMBODIMENTS

Principles of example embodiments disclosed herein will now be described with reference to various example embodiments illustrated in the drawings. It should be appreciated that depiction of these embodiments is only to enable those skilled in the art to better understand and further implement example embodiments disclosed herein, not intended for limiting the scope disclosed herein in any manner.

As used herein, the term "includes" and its variants are to be read as open-ended terms that mean "includes, but is not limited to." The term "or" is to be read as "and/or" unless the context clearly indicates otherwise. The term "based on" is to be read as "based at least in part on." The term "one example embodiment" and "an example embodiment" are to be read as "at least one example embodiment." The term "another embodiment" is to be read as "at least one other embodiment". The terms "first device," "second device," and "third device" can be used interchangeably. For example, a first device may function as a second device or a third device, a second device may function as a first device or a third device, and a third device may function as a first device or a second device.

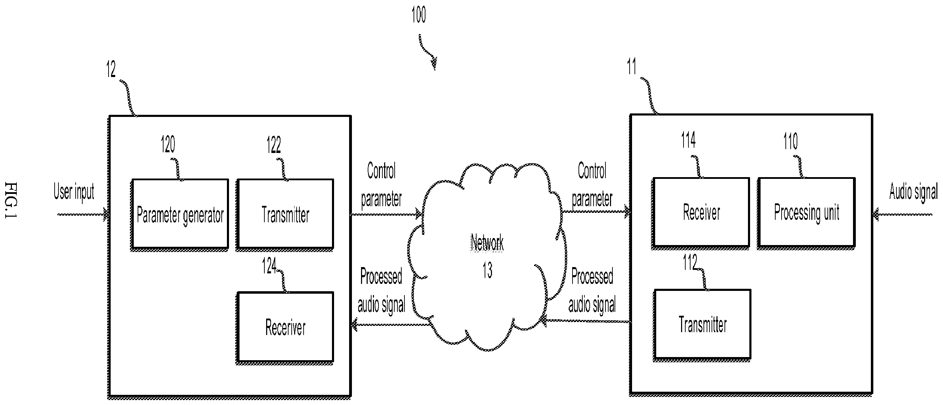

FIG. 1 shows a block diagram of an audio communication system 100 involving an audio sender device and an audio receiver device in accordance with one example embodiment disclosed herein. In the system 100, the first device 11 is an audio sender device and the second device 12 is an audio receiver device. The second device 12 is a remote device relative to the first device 11, and the first device 11 is a remote device relative to the second device 12. The first device 11 or the second device 12 may be, for example, a conference device, a cellular telephone, user equipment, a mobile terminal, a media player, a computer, a laptop computer, a tablet computer, a portable device, a gaming device, a computer monitor, a television, or other electronic equipment.

In some embodiments, the first device 11 may capture an audio signal from a microphone or microphone array to be transmitted to the second device 12. In some other embodiments, the audio signal may be captured by an external device and then transmitted to the first device 11. The audio signal may include speech, noise, music, dialog, or the like.

The first device 11 includes a processing unit 110, a transmitter 112, and a receiver 114, as depicted in FIG. 1. The processing unit 110 is configured to process the audio signal, such as perform noise suppression, speech enhancement, equalization, echo cancellation, coding compression, and the like. The processed audio signal is transmitted to the second device 12 by the transmitter 112.

The second device 12, as depicted in FIG. 1, includes a parameter generator 120, a transmitter 122, and a receiver 124. The receiver 124 is configured to receive the processed audio signal and playback the signal via a speaker or speakers to the local user in some embodiments.

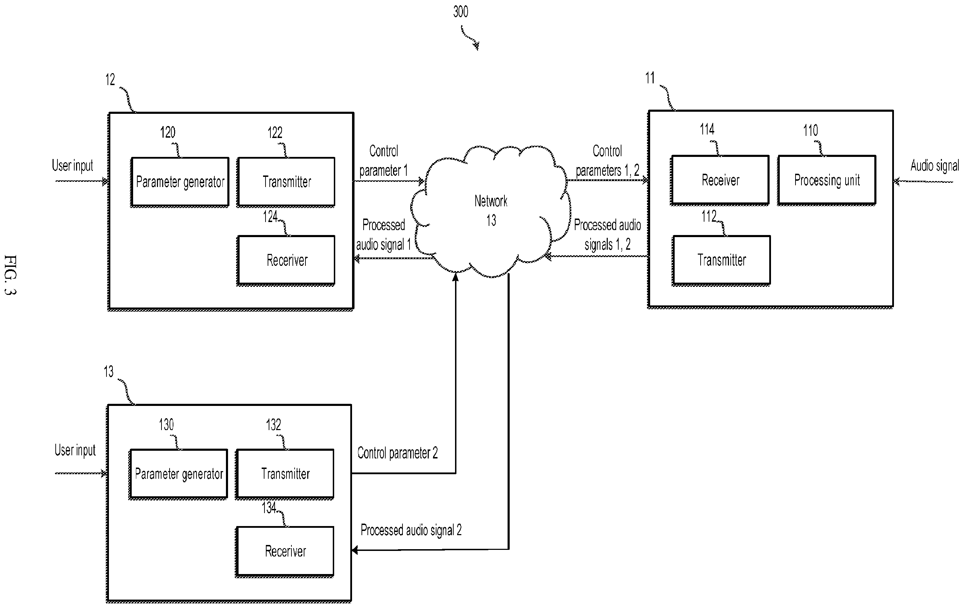

It will be appreciated to those skilled in the art, that although FIG. 1 and FIG. 3 illustrate a single receiver (114/124) and a single transmitter (112/122) in the first and second devices (11/12) it is possible that those devices can be equipped with multiple transmitters and receivers which may for example be configured for multiple input multiple output (MIMO) operations.

The processed audio signal is transmitted to the second device 12 through the network 13 in the embodiment of FIG. 1. The processed audio signal may be in any pre-defined protocol which the first and second devices 11 and 12 agree to and the network 13 can support. The network 13 may be, for example, a cellular network, an Internet/TCP network, a local area network (LAN), a wide area network (WAN), a Wi-Fi network, a Bluetooth personal area network(PAN), a Zigbee network, WiGig Network, a public land mobile network (PLMN), or any other wireless or wired network. A cellular network may for example, include an Universal Mobile Telecommunications System (UMTS) Terrestrial Radio Access (UTRA) using wideband CDMA (WCDMA) employing communication protocols such as High-Speed Packet Access (HSPA) and/or Evolved HSPA (HSPA+), a CDMA2000, CDMA2000 IX, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), a GSM EDGE (GERAN) network, a first responders network such as the recently adopted FirstNet Interoperability Broadband Network in the United States, and an Evolved UMTS Terrestrial Radio Access (E-UTRA) network supporting Long Term Evolution (LTE) and/or LTE-Advanced (LTE-A) air interfaces as specified in one or more Third Generation Partnership Project (3GPP) Specifications. Further, a Wi-Fi network suitable for use in the network 13 may be, for example, an IEEE 802.16 network (e.g., Worldwide Interoperability for Microwave Access (WiMAX)). In some other embodiments, the first device 11 and the second device 12 may be directly connected via a wireless or wired connection.

In accordance with example embodiments disclosed herein, the second device 12 can transmit a control parameter to the first device 11 to control the audio processing at the audio sender side. The parameter generator 120 included in the device 12 is configured to generate a control parameter based on a user input from a local user of the second device 12. That is, the control parameter may be achieved through user interaction at the audio receiver device, for example, the second device 12. The control parameter may specify a user interference for an audio signal to be transmitted to the second device 12 by the first device 11. In some embodiments disclosed herein, the second device 12 may receive the user input of the user and then generate the corresponding control parameter based on the user input.

For example, if a user of the second device 12 intents to increase a noise suppression level for the audio signal, several options for noise suppression level are displayed on the second device 12. Upon the user selecting one of the options, the corresponding noise suppression level may be generated and sent to the first device 11 as a control parameter via the network 13.

The second device 12 may additionally include an input-output interface (which is not shown). The input-output interface may include a monitor, buttons, joysticks, click wheels, scrolling wheels, a touch screen, other touch sensors such as track pads or touch-sensor-based buttons, vibrators, audio components such as microphones and speakers, image capture devices such as a camera, keyboards, key pads, and other equipment for gathering input from a user or other external source and/or generating output for a user or for external device.

The input-output interface may be configured to show the types and levels of audio processing available to the local user and receive user input of the second device 12. The user input may then be provided to the parameter generator 120 of the second device 12 to generate a control parameter.

The generated control parameter is transmitted to the first device 11 by the transmitter 122 of the second device 12. The receiver 114 included in the first device 11 receives the control parameter from the second device 12 and passes it into the processing unit 110. The processing unit 110 is configured to process the audio signal based on the control parameter. Specifically, the processing unit 110 may also has a set of pre-defined processing operations and may adjust one or more processing algorithms or operations based on the control parameter in some embodiments disclosed herein. If the control parameter received from the second device 12 only specifies one or some processing aspects of the audio signal, processing operations in other aspects may be remain unchanged at the first device 11 in some embodiments disclosed herein.

In some further embodiments disclosed herein, in addition to the control parameter, processing capacity of the first device 11 and/or network bandwidth available for transmitting the processed audio signal may also be taken into consideration when the processing unit 110 processes the audio signal. In those embodiments, the audio processing may compromise on the user preference of the audio receiver device, the local processing capacity of the audio sender device, and the transmission bandwidth. By way of example, if the control parameter specifies a noise suppression scheme which will consume a lot of processing resources, the processing unit 110 in the first device 11 may make a tradeoff between the user-preferred noise suppression and the local processing resources. In another example, if there is no sufficient bandwidth in the network 13 for transmitting a high quality audio that is preferred by the user of the second device 12, the processing unit 110 may sacrifice the audio quality so as to successfully transmit the processed audio signal.

In some embodiments disclosed herein, the control parameter may specify a noise suppression level, an equalization level, echo cancellation, a coding compression rate, a source direction of interest, or the like.

In some example embodiments where the control parameter specifies a noise suppression level, several options for noise suppression level may be displayed on the input-output interface of the second device 12 for the user. Upon receiving a user input for selecting one of the options, a control parameter specifying the suppression level may be generated by the parameter generator 120 and provided to the first device 11 by the transmitter 122. The processing unit 110 in the device 11 then may suppress noise in the audio signal based on the control parameter. For example, the processing unit 110 may determine gains applied into different frequency bands of the audio signal based on the specified noise suppression level, such that ambiance noise on particular frequency bands can be suppressed. In some other embodiments, a suppression level may be a continuous value in a range of suppression level that can be achieved by the first device 11. The user of the second device 12 may then select a desired suppression level from the range.

In some example embodiments disclosed herein, several options for equalization level may be displayed for the local user of the second device 12 to decide the equalization processing as desired. The control parameter generated in these embodiments may specify an equalization level selected by the user. Upon receiving a user input for selecting one of the options, a control parameter specifying the equalization level may be generated by the parameter generator 120 and provided to the first device 11 by the transmitter 122. The audio signal may then be equalized by the processing unit 110 of the device 11 based on the equalization level specified by the control parameter. In some other embodiments, an equalization level may be a continuous value in a range of equalization level that can be achieved by the first device 11. The user of the second device 12 may then select a desired equalization level from the range.

In some other example embodiments, an option for echo cancellation may be displayed, so that the local user is able to decide whether to perform echo cancellation on an audio signal to be transmitted from the first device 11 by selecting or unselecting the option. In these embodiments, the generated control parameter may specify echo cancellation. More specifically, the control parameter may specify whether echo cancellation of the audio signal is activated by the user of the second device 12. The control parameter may be transmitted by the transmitter 122 of the second device 12 to the receiver 114 of the first device 11 via the network 13 and then passed into the processing unit 110 within the device 11. The processing unit 110 may perform then echo cancellation on the audio signal during the audio processing.

In some embodiments disclosed herein, the user of the second device 12 may also be allowed to control a coding scheme of an audio signal to be transmitted from the audio sender device. For example, the user of the second device 12 may be able to change a coding compression rate based on the audio perceptual quality at the receiving side and/or the network bandwidth. In these embodiments, the generated control parameter may specify a coding compression rate. The second device 12 may display possible coding compression rates to the user for selection in some embodiments. In some other embodiments, a coding compression rate may be corresponding to an audio coding scheme. The user may select from possible audio compression formats a preferred audio compression format which can provide good perceptual quality and/or a high speed of network transmission. The user input may be transmitted into the parameter generator 120 to generate a corresponding control parameter. The control parameter is transmitted to the first device 11 by the transmitter 112 via the network 13. The processing unit 110 included in the first device 11 may then encode the audio signal based on the specified coding scheme.

In some cases, speech from multiple human speakers of the first device 11 as well as background noise from one or more noise sources may be captured in the audio signal. For example, multiple participants at one conference party may be involved in a teleconference meeting with another conference party. A conference device may capture speech from those participants via, for example, a microphone array and then send the speech audio to the other conference party. In those embodiments where the audio signal includes audio from multiple source directions (for example, multiple human speakers seating in different directions of a meeting room), a user of the second device 12 may prefer to enhance speech from some (or only one) of those speakers.

In order to provide the remote user with the ability to change a preferred source direction, in some embodiments disclosed herein, the first device 11, such as the processing unit 110 included in the device 11 may identify a plurality of source directions in the audio signal. The identified source directions may be transmitted to the second device 12 by the transmitter 112 of the device 11. In this way, by displaying the identified source directions on the second device 12, the user may be able to select one or more source directions of interest from the displayed source directions.

The processing unit 110 may perform speaker identification to identify possible local human speakers in an example embodiment. In this case, each of the identified source directions corresponds to an active speaker at the sender side. In another embodiment, the processing unit 110 may separate audio source directions from the captured audio signal, each source direction corresponding to a sound source. A sound source may be a human speaker, a noise sound, or the like. It is noted that any existing or further developed methods for speaker identification or audio source separation may be employed. The scope of the subject matter disclosed herein is not limited in this regard.

In an embodiment according to the invention, the first device 11 captures a video signal associated with the audio signal. The first device 11 in this embodiment may be equipped with a video capture device such as a camera. The video signal is transmitted to the second device 12 to allow the user to select one or more speakers contained in the video signal to enhance their speech quality.

In yet another example embodiment, a user of the second device 12 may be able to activate a function of voice activity detection (VAD) in the first device 11. For example, the user of the second device 12 may select an option shown on the second device 12 to activate the VAD function in the first device 11. The preference of activating VAD may be informed to the first device 11. The first device 11 may then identify source directions corresponding to human speakers only in the audio signal.

The identified source directions are informed to the second device 12 by the transmitter 112 of the first device 11. In some embodiments, identifiers of the source directions may be transmitted. The identifiers may be the names of the speakers, or any other characters or numbers that can distinguish the speakers or the directions of the speakers from each other.

The receiver 124 in the second device 12 receives the identified source directions from the first device 11 via the network 13. The identified source directions may be displayed on the second device 12 such that the user can select a source direction of interest. The identified source directions may be listed in a table in one embodiment, each entry of the table corresponding to a source direction. By selecting an entry of the table, the corresponding source direction is chosen by the user and a corresponding control parameter specifying the source direction of interest may be generated. In another embodiment, the identified source directions may be displayed in a two-dimensional graphic interface, with an identifier of each source direction locating in a corresponding direction. In this way, the source directions may be visually displayed to facilitate the user selection. In yet another embodiment, the identified source directions may be represented in a three-dimensional spherical window to further facilitate the user to select a preferred source direction. In embodiments where the associated video signal is provided, the user of the second device 12 chooses any source directions or human speakers of interest, for example, by tapping or circling the video image displayed on the second device 12.

It is to be understood that many other representation ways may be adopted to show the identified source directions to the user of the second device 12, and the scope of the subject matter disclosed herein is not limited in this regard.

In some other embodiments, the user of the second device 12 may select a source direction of interest without the source direction identification by the first device 11. For example, a dial with a range of direction may be shown on the second device 12. In these embodiments, a source direction in which the audio quality is desired to be enhanced may be fine-tuned on the dial by the user.

Upon the user selecting one or more of the identified source directions as source directions of interest, a control parameter informing the directions of interest may be generated by the parameter generator 120 and transmitted to the first device 11 by the transmitter 122 via the network 13.

The receiver 114 in the first device 11 may receive this control parameter and pass it into the processing unit 110 to intervene the audio signal processing. The processing unit 110 may be configured to process the audio signal by enhancing audio quality of the audio signal in the source direction of interest relative to other identified source directions in some embodiments. Specifically, the processing unit 110 may construct a beamformer such that the voice in the source direction of interest may be enhanced while ambience noise or audio in other directions may be suppressed. The processed audio signal may have an increased audio quality in the source direction of interest, which is preferred by the user of the audio receiver device.

It is noted that although the first device 11 may perform speech enhancement automatically, the enhanced speech may not be desirable when the first device 11 has no knowledge which direction is preferred by a user of the audio receiver device. According to the speech enhancement provided herein, the user at the audio receiver side may flexibly change a source direction that is to be enhanced in the audio sender device.

It is possible to transmit all the audio signals captured by the microphone array and perform speech enhancement at the audio receiver device (for example, the second device 12) such that user can select the source direction of interest to enhance audio quality. However, this method would require substantially more network bandwidth for transmitting multi-channel audio signals. On the other hand, according to the method provided herein, the first device 11 may only need to transmit a mono signal or signals in a reduced number of channels out of the constructed beamformer to the second device 12, which may potentially reduce the required network bandwidth.

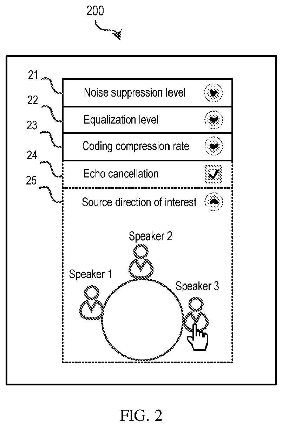

FIG. 2 shows a schematic diagram illustrating a user graphic interface 200 for controlling processing parameters at the second device 12 in accordance with an example embodiment disclosed herein. The user graphic interface 200 may be provided on the second device 12. In the user graphic interface 200, options for possible types of audio processing are shown, including noise suppression level 21, equalization level 22, coding compression rate 23, echo cancellation 24, and source direction of interest 25. A user of the second device 12 may be able to control the levels of the audio processing by unfolding the options 21, 22, 23, and 25 or by selecting the option 24. As shown in FIG. 2, the processing of echo cancellation is chosen, such that the processed audio signal may have echo cancelled. The user of the second device 12 also expects to control speech enhancement of the audio signal by selecting a source direction of interest. The identified source directions received from the first device 11 are shown in the user graphic interface 200, where three human speakers, Speakers 1, 2, and 3, locate in respective directions. Suppose the user wants to enhance the audio quality of Speaker 3. The user can directly click the identifier of Speaker 3 shown in the user graphic interface 200. The source direction corresponding to Speaker 3 may be determined by the parameter generator 120 as a source direction of interest. The source direction of interest may be provided to the first device 11 to control the speech enhancement processing.

Some examples of audio processing based on the control parameter provided from a remote audio receiver device are discussed above for purpose of illustration. It will be appreciated that any other types of audio processing may be specified by a user of the audio receiver device and send to the audio sender device to control the audio processing.

In some further embodiments, the first device 11 may also obtain a video signal associated with the audio signal, process the video signal, and transmit the processed video signal to the second device 12. For example, in video conference systems, voices and images of one conference party may be captured and transmitted to other conference parties. In general, a user at the audio and video receiver side, such as the user of the second device 12 may be interested in a particular region in the video image of the video signal. Conventionally equal importance/weights are placed on all pixels in a video image of a captured video signal when performing equalization on the video signal, which results in poor quality of the region of interest in the image.

In some embodiments disclosed herein, the control parameter received from the second device 12 may also be used to control the video signal processing in the first device 11. In these embodiments, the first device 11, for example, the processing unit 110 included in the device 11 may be configured to process the video signal associated with the audio signal based on the control parameter, so as to keep a match between the processed audio signal and the processed video signal.

In an embodiment disclosed herein, if audio quality of the audio signal in a source direction of interest is enhanced based on the control parameter, which means that the user at the audio receiver side prefers voices from the direction of interest, then the video signal may be processed accordingly to have an image of the human speaker or other object in the direction to be focused. The image region in the source direction of interest may be determined as a region of interest. In one embodiment, the video signal may be captured by a 180 or 360 degree panoramic camera, and only the image region of the speaker of interest is processed by the processing unit 110 and then transmitted to the second device 12. In another embodiment, the processing unit 110 may adjust the focus/exposure of the camera of the first device 11 to capture finer details of the region of the speaker in the source direction of interest. The image quality of the region determined by the source direction of interest may be enhanced in the processing unit 110. For example, the denoising and/or filtering algorithm within the region may be adjusted to enhance the image quality of the region of interest. In another example, when coding the video signal, more bits may be used to encode the region of interest, while fewer bits may be used to encode other regions in the video image.

It will be appreciated that if more than one source direction of interest are received from the second device 12, multiple regions of interest may be determined for the video signal and each of the regions may be processed accordingly.

In another embodiment disclosed herein, if the control parameter received from the second device 12 specifies voice activity detection, which means that only human voices are preferred by the remote user at the audio and video receiver side, then the first device 11 may process the video signal to focus on human faces. The image quality in the regions of human faces may be enhanced relative to other regions in an image of the video signal. For example, the denoising and/or filtering algorithm within the regions of human faces may be adjusted to enhance their quality. In another example, when coding the video signal, more bits may be used to encode the regions of human faces, while fewer bits may be used to encode other regions in the video image.

In yet another embodiment disclosed herein, if the control parameter indicates that the user of the second device 12 prefers a higher coding compression rate of the audio signal, the first device 11 may also processed the associated video signal with a higher video coding compression rate.

In some other embodiments disclosed herein, the user of the second device 12 may be shown possible types and levels of video processing. The user can select one or more types or levels he/she prefers through the input-output interface (not shown) included in the second device 12. The parameter generator 120 may generate a further control parameter for video processing and the further control parameter is also provided to the first device 11. The first device 11 may process the video signal to be transmitted to the second device 12 based on the further control parameter. The video processing includes, but is not limited to, region of interest detection, filtering, zooming in/out on a particular region, video noise reduction, and the like.

Example embodiments are discussed above with reference to FIG. 1 where one audio sender device and one audio receiver device are involved. In some multicast communication systems, an audio sender device may transmit the captured audio signal to multiple audio receiver devices. FIG. 3 shows a block diagram of an audio communication system 300 involving an audio sender device and two audio receiver devices for such use cases. Compared with the system 100, an additional audio receiver device, for example, a third device 13 is involved in the system 300. The third device 13 is a remote device relative to the first device 11. The third device 13 is connected to the first device 11 via the network 13 in the embodiment of FIG. 3. In some other embodiments, the third device 13 may be directly connected to the first device 11 via a wireless or wired connection. In some further embodiments, the third device 13 may also communicate with the second device 12.

In some embodiments disclosed herein, the first device 11 may capture an audio signal, processed the audio signal, and transmit the processed audio signal to both the second device 12 and the third device 13. In this case, the third device 13 is an audio receiver device. Similar to the second device 12, the third device 13 includes a parameter generator 130, a transmitter 132, and a receiver 134.

In accordance with embodiments disclosed herein, the third device 13 can transmit a control parameter to the first device 11 to control the audio processing at the audio sender side. The control parameter may specify a user preference for processing of the audio signal to be transmitted to the third device 13 by the first device 11. Possible types and levels of audio processing may be shown to the user of the third device 13 and the control parameter may be generated based on the user input. The generation of the control parameter in the third device 13 is similar to what is described with reference to the second device 12, which is omitted here for the sake of clarity.

As shown in FIG. 3, the second device 12, for example, the transmitter 122 included in the device 12 transmits a control parameter 1 to the first device 11. The control parameter 1 may specify a user preference for the audio signal to be transmitted by the first device 11 and may be generated based on a user input of the second device 12. The third device 13, for example, the transmitter 132 included in the device 13 transmits a control parameter 2 to the first device 11. The control parameter 2 may specify a user preference for the audio signal to be transmitted by the first device 11 and may be generated based on a user input of the third device 13. In an embodiment disclosed herein, the control parameter 1 and the control parameter 2 may specify different types of audio processing or different levels of a particular type of audio processing. In another embodiment disclosed herein, the control parameters 1 and 2 may specify the same type and the same level of audio processing. The scope of the subject matter disclosed herein is not limited in this regard.

The first device 11, for example, the receiver 114 included in the device 11 receives the control parameters 1 and 2 from the second device 12 and the third device 13. The first device 11, for example, the processing unit 110 included in the device 11 may be configured to process the audio signal based on the control parameters 1 and 2. The processed audio signal 1 is transmitted to the second device 12, and the processed audio signal 2 is transmitted to the third device 13 by the transmitter 112.

In some embodiments disclosed herein, the processing unit 110 may determine whether the control parameters 1 and 2 specify the same type and level of audio processing. If the two parameters are the same and specify the same type and level of audio processing, the processing unit 110 may process the audio signal based on any one of the control parameters 1 and 2 to generate a processed audio signal. In this case, the processed signals 1 and 2 are the same, and the processing unit 110 needs to process the audio signal for one time.

In embodiments where the two parameters are different and specify different typed or levels of audio processing, the processing unit 110 may have several options for audio processing.

In one embodiment disclosed herein, the processing unit 110 may be configured to process the audio signal based on the control parameter 1 only to obtain a processed audio signal 1 and process the audio signal based on the control parameter 2 to obtain a processed audio signal 2 only. In this case, the audio signal may be processed in the processing unit 110 for twice. The processed audio signals 1 and 2 may be different from each other and may be sent to the second and third devices, respectively.

In another embodiment where the control parameters 1 and 2 are different, the processing unit 110 may determine whether the parameters specify a conflict of user preference. For example, if the control parameter 1 specifies that the noise suppression level should be decreased while the control parameter 2 specifies that the noise suppression level should be increased, then there is a conflict of user preference between the two parameters. In another example, if the control parameter 1 specifies a preferred noise suppression level while the control parameter 2 specifies a preferred equalization level, there is no conflict of user preference between the control parameters.

When it is determined that there is no conflict of user preference between the control parameters, the processing unit 110 may be configured to process the audio signal based on both the control parameters 1 and 2 to generate one processed audio signal. The processed audio signal may satisfy both the user preferences of the second device 12 and the third device 13. Then the processed audio signal is transmitted by the transmitter 112 to both the second device 12 and the third device 13. In this case, the processed audio signals 1 and 2 shown in FIG. 3 are the same.

When it is determined that there is a conflict of user preference between the control parameters, the processing unit 110 may process the audio signal twice so as to generate two processed audio signals in some embodiments. The processed audio signal 1 is processed based on the control parameter 1 while the processed audio signal 2 is processed based on the control parameter 2.

In some other embodiments where the control parameters 1 and 2 are different and there is a conflict between the two parameters, the processing unit 110 may be configured to process the audio signal for one time based on an average level of the control parameters 1 and 2. As such, the first device 11 may reduce the cost of processing. In one example, if the control parameter 1 specifies that the noise suppression level should be decreased while the control parameter 2 specifies that the noise suppression level should be increased, an average noise suppression level may be determined. The audio signal may be processed by the processing unit 110 based on the determined average level of noise suppression. The processed audio signals 1 and 2 may be the same in these embodiments.

In some further embodiments where the control parameters 1 and 2 are different, the processing unit 110 may be configured to process the audio signal based on a priority among the second device 12 and the third device 13. For example, if the second device 12 has a higher priority than the third device 13 in the system 300, the processing unit 110 may decide to process the audio signal based on the control parameter 1 received from the second device 12. The processed audio signal based on the control parameter 1 may be transmitted to the second and third devices. In these embodiments, when the first device 11 has limited resources for audio processing, the user preference of the device with a higher priority may be satisfied first.

It will be appreciated that the audio sender device may be configured to process the audio signal further based on other factors such as the processing capacity, the network transmission bandwidth, and the like. It will also be appreciated that the audio sender device may process a video signal associated with the audio signal based on the control parameters received from multiple audio receiver devices and send the processed video signal to those receiver devices.

Although two audio receiver devices, for example, the second device 12 and the third device 13 are shown in FIG. 3, it will be appreciated that there may be more than two audio receiver devices included in an audio communication system. It will also be appreciated that an audio receiver device can receive processed audio signals from more than one audio sender device. The audio receiver device is able to transmit the same or different control parameters to control the audio processing in different audio sender devices. The scope of the subject matter disclosed herein is not limited in this regard.

It is noted that although the second device 12 and the third device 13 are shown as audio receiver devices, they can also act as audio sender devices. For example, the second device 12 may capture an audio signal, process the captured audio signal, and transmit the processed audio signal to the third device 13 or the first device 11. The third device 13 may also capture an audio signal, process the captured audio signal, and transmit the processed audio signal to the second device 12 or the first device 11. In these cases, the second device 12 may additionally include a processing unit, the function of which may be the same as the processing unit 110 discussed with reference to the first device 11. The third device 13 may additionally include a processing unit, the function of which may be the same as the processing unit 110 discussed with reference to the first device 11.

It is also noted that although the first device 11 is shown as an audio sender device, it can also act as an audio receiver device. For example, the first device 11 may transmit a control parameter to the second device 12 or the third device 13 to control the audio signal processing in those devices. The first device 11 may also receive a processed audio signal from the second device 12 or the third device 13. In this case, the first device 11 may additionally include a parameter generator, the function of which may be the same as the parameter generator 120 or 130 discussed with reference to the first device 11.

It is noted that the transmitter and receiver included in the first, second, or third device may function as one transceiver. The transmitter 112, 122, or 132 may include radio-frequency (RF) transmitting circuitry formed from one or more integrated circuits, power amplifier circuitry, passive RF components, one or more antennas, and other circuitry for transmitting wireless signals or other kinds of signals. The receiver 114, 124, or 134 may include RF receiving circuitry formed from one or more integrated circuits, power amplifier circuitry, passive RF components, one or more antennas, and other circuitry for receiving wireless signals or other kinds of signals. As mentioned above, the first and second devices (11/12) may be equipped with one or more transmitters and receivers configured to operate in one or more of the networks 13 described above. The third device (13) may also be equipped with one or more transmitters and receivers.

It is also noted that the processing unit 110 or the parameter generator 120 may be a processor, a set of processors, a microprocessor, a set of microprocessors, a central processing unit (CPU), any combination thereof, or any other processing circuitry.

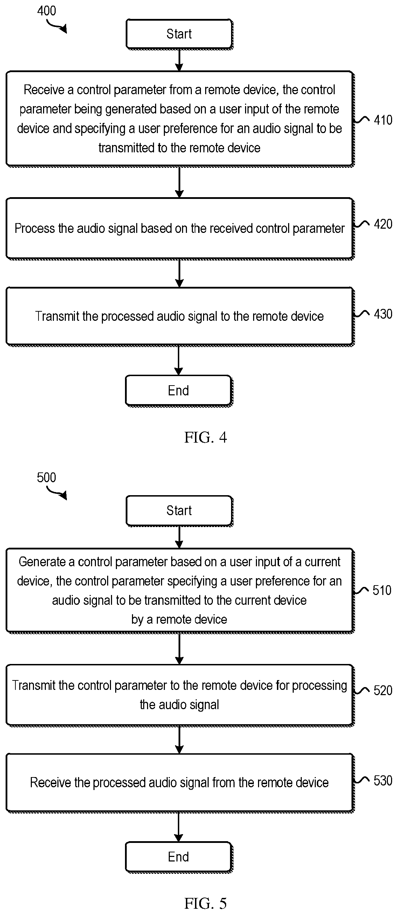

FIG. 4 is a flowchart of a method of processing an audio signal 400 in an audio sender device in accordance with an example embodiment disclosed herein. The audio sender device may be the first device 11 in the system 100 or 300.

The method 400 is entered at step 410, where a control parameter is received at the current device from a remote device. The control parameter may be generated based on a user input of the remote device and specify a user preference for an audio signal to be transmitted to the remote device. In some embodiments, the audio signal may be captured by the current audio sender device, for example, the first device 11. The remote device may be an audio receiver device 12 in the system 100 or 300. At step 420, the audio signal is processed at the current device based on the received control parameter. At step 430, the processed audio signal is transmitted to the remote device. The processed audio signal may be playback at the remote device in some embodiments.

In some embodiments disclosed herein, the control parameter may specify at least one of a source direction of interest, a noise suppression level, an equalization level, echo cancellation, or a coding compression rate.

In some embodiments where the control parameter specifies the source direction of interest, a plurality of source directions may be identified in the audio signal, and the identified source directions may be transmitted to the remote device, such that the source direction of interest is selected from the identified source directions by the user input of the remote device.

In some embodiments where the control parameter specifies the source direction of interest, the audio signal may be processed by enhancing audio quality of the audio signal in the source direction of interest relative to other identified source directions.

In some embodiments disclosed herein, a further control parameter may be received at the current device from a further remote device. The further control parameter may be generated based on a user input of the further remote device and specify a further user preference for the audio signal. The further remote device may be an audio receiver device 13 in the system 300. In these embodiments, the audio signal captured by the current device is transmitted to multiple audio receiver devices, for example, the remote device and the further remote device. The audio signal may be processed based on the control parameter and the further control parameter to obtain a processed audio signal. That is, the current device processes the audio signal for one time to obtain a processed audio signal. The processed audio signal may be transmitted to both the remote device and the further remote device.

In some other embodiments where a further control parameter is received from a further remote device, the control parameter from the remote device is used to process the audio signal to obtain a processed audio signal, while the further control parameter from the further remote device is used to process the audio signal to obtain a further processed audio signal. The processed audio signal based on the control parameter received from the remote device may be transmitted to the remote device, while the processed audio signal based on the further control parameter received from the further remote device may be transmitted to the further remote device.

In some embodiments disclosed herein, the audio signal may be processed at the current device further based on at least one of processing capacity of the current device or network bandwidth available for transmitting the processed audio signal.

In some embodiments disclosed herein, a video signal associated with the audio signal may be processed at the current device based on the control parameter and the processed video signal may be transmitted to the remote device.

FIG. 5 is a flowchart of a method of processing an audio signal 500 in an audio receiver device in accordance with an example embodiment disclosed herein. The audio receiver device may be the second device 12 in the system 100 or 300.

The method 500 is entered at step 510, where a control parameter is generated at the current device based on a user input of the current device. The control parameter may specify a user preference for an audio signal to be transmitted to the current device by a remote device. In some embodiments, the audio signal may be captured by the remote device. The remote device may be an audio sender device 11 in the system 100 or 300. At step 520, the control parameter is transmitted to the remote device for processing the audio signal at the remote device. At step 530, the processed audio signal is received from the remote device. The processed audio signal is the signal processed by the remote device based on the control parameter.

In some embodiments disclosed herein, the control parameter may specify at least one of a source direction of interest, a noise suppression level, an equalization level, echo cancellation, or a coding compression rate.

In some embodiments according to the invention where the control parameter specifies the source direction of interest, a plurality of source directions identified in the audio signal is received from the remote device. In these embodiments, the source direction of interest is selected from the identified source directions by the user input of the current device.

In some embodiments according to the invention where the control parameter specifies the source direction of interest, the audio signal is processed in the remote device by enhancing audio quality of the audio signal in the source direction of interest relative to other identified source directions.

In some embodiments disclosed herein, the audio signal may be processed in the remote device based on the control parameter and a further control parameter of a further remote device, the further control parameter being generated based on a user input of the further remote device and specifying a further user preference for the audio signal. The further remote device may be an audio receiver device 13 in the system 300.

In some embodiments disclosed herein, the audio signal may be processed in the remote device further based on at least one of processing capacity of the remote device or network bandwidth available for transmitting the processed audio signal.

In some embodiments disclosed herein, a processed video signal associated with the audio signal may be received from the remote device. The video signal may be processed in the remote device based on the control parameter.

For the sake of clarity, some optional components of the first device 11, second device 12, and third device 13 are not shown in FIG. 1 or FIG. 3. However, it should be appreciated that the features as described above with reference to FIGs. 2 and 5 are all applicable to the second device 12 or the third device 13, and the features as described above with reference to FIG. 4 are all applicable to the first device 11. Moreover, the components of the first device 11, second device 12, or third device 13 may be a hardware module or a software unit module. For example, in some embodiments, the transmitter, the receiver, the processing unit, or the parameter generator included in the first device 11, second device 12, or third device 13 may be implemented partially or completely as software and/or in firmware, for example, implemented as a computer program product embodied in a computer readable medium. Alternatively or additionally, the transmitter, the receiver, the processing unit, or the parameter generator included in the first device 11, second device 12, or third device 13 may be implemented partially or completely based on hardware, for example, as an integrated circuit (IC), an application-specific integrated circuit (ASIC), a system on chip (SOC), a field programmable gate array (FPGA), and so forth. The scope of the subject matter disclosed herein is not limited in this regard.

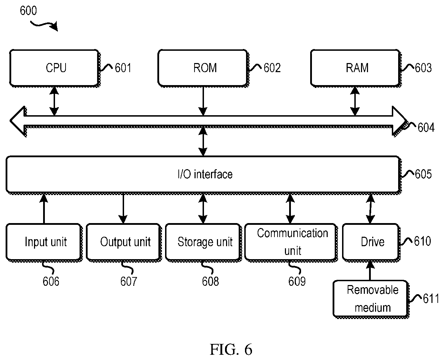

FIG. 6 depicts a block diagram of an example computer system 600 suitable for implementing example embodiments disclosed herein. In some example embodiments, the computer system 600 may be suitable for implementing a method of processing an audio signal in an audio sender device, such as the first device 11 in FIG. 1 or FIG. 3. The computer system 600 may also suitable for implementing a method of processing an audio signal in an audio receiver device, such as the second device 12 or the third device 13 in FIG. 1 or FIG. 3.

As depicted in FIG. 6, the computer system 600 comprises a central processing unit (CPU) 601 which is capable of performing various processes in accordance with a program stored in a read only memory (ROM) 602 or a program loaded from a storage unit 608 to a random access memory (RAM) 603. In the RAM 603, data required when the CPU 601 performs the various processes or the like is also stored as required. The CPU 601, the ROM 602 and the RAM 603 are connected to one another via a bus 604. An input/output (I/O) interface 605 is also connected to the bus 604.

The following components are connected to the I/O interface 605: an input unit 606 including a keyboard, a mouse, or the like; an output unit 607 including a display such as a cathode ray tube (CRT), a liquid crystal display (LCD), or the like, and a loudspeaker or the like; the storage unit 608 including a hard disk or the like; and a communication unit 609 including a network interface card such as a LAN card, a modem, or the like. The communication unit 609 performs a communication process via the network such as the internet. A drive 610 is also connected to the I/O interface 605 as required. A removable medium 611, such as a magnetic disk, an optical disk, a magneto-optical disk, a semiconductor memory, or the like, is mounted on the drive 610 as required, so that a computer program read therefrom is installed into the storage unit 608 as required.

Specifically, in accordance with example embodiments disclosed herein, the methods described above with reference to FIGs. 4 and 5 may be implemented as computer software programs. For example, example embodiments disclosed herein comprise a computer program product including a computer program tangibly embodied on a machine readable medium, the computer program including program code for performing the method 400 or 500. In such embodiments, the computer program may be downloaded and mounted from the network via the communication unit 609, and/or installed from the removable medium 611.

Generally speaking, various example embodiments disclosed herein may be implemented in hardware or special purpose circuits, software, logic or any combination thereof. Some aspects may be implemented in hardware, while other aspects may be implemented in firmware or software which may be executed by a controller, microprocessor or other computing device. While various aspects of the example embodiments disclosed herein are illustrated and described as block diagrams, flowcharts, or using some other pictorial representation, it will be appreciated that the blocks, apparatus, systems, techniques or methods described herein may be implemented in, as non-limiting examples, hardware, software, firmware, special purpose circuits or logic, general purpose hardware or controller or other computing devices, or some combination thereof.

Additionally, various blocks shown in the flowcharts may be viewed as method steps, and/or as operations that result from operation of computer program code, and/or as a plurality of coupled logic circuit elements constructed to carry out the associated function(s). For example, example embodiments disclosed herein include a computer program product comprising a computer program tangibly embodied on a machine readable medium, the computer program containing program codes configured to carry out the methods as described above.

In the context of the disclosure, a machine readable medium may be any tangible medium that can contain, or store a program for use by or in connection with an instruction execution system, apparatus, or device. The machine readable medium may be a machine readable signal medium or a machine readable storage medium. A machine readable medium may include, but not limited to, an electronic, magnetic, optical, electromagnetic, infrared, or semiconductor system, apparatus, or device, or any suitable combination of the foregoing. More specific examples of the machine readable storage medium would include an electrical connection having one or more wires, a portable computer diskette, a hard disk, a random access memory (RAM), a read-only memory (ROM), an erasable programmable read-only memory (EPROM or Flash memory), a portable compact disc read-only memory (CD-ROM), an optical storage device, a magnetic storage device, or any suitable combination of the foregoing.

Computer program code for carrying out methods disclosed herein may be written in any combination of one or more programming languages. These computer program codes may be provided to a processor of a general purpose computer, special purpose computer, or other programmable data processing apparatus, such that the program codes, when executed by the processor of the computer or other programmable data processing apparatus, cause the functions/operations specified in the flowcharts and/or block diagrams to be implemented. The program code may execute entirely on a computer, partly on the computer, as a stand-alone software package, partly on the computer and partly on a remote computer or entirely on the remote computer or server. The program code may be distributed on specially-programmed devices which may be generally referred to herein as "modules". Software component portions of the modules may be written in any computer language and may be a portion of a monolithic code base, or may be developed in more discrete code portions, such as is typical in object-oriented computer languages. In addition, the modules may be distributed across a plurality of computer platforms, servers, terminals, mobile devices and the like. A given module may even be implemented such that the described functions are performed by separate processors and/or computing hardware platforms.

As used in this application, the term "circuitry" refers to all of the following: (a) hardware-only circuit implementations (such as implementations in only analog and/or digital circuitry) and (b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a mobile phone or server, to perform various functions) and (c) to circuits, such as a microprocessor(s) or a portion of a microprocessor(s), that require software or firmware for operation, even if the software or firmware is not physically present. Further, it is well known to the skilled person that communication media typically embodies computer readable instructions, data structures, program modules or other data in a modulated data signal such as a carrier wave or other transport mechanism and includes any information delivery media.

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Certain features that are described in this specification in the context of separate embodiments can also be implemented in combination in a single embodiment. Conversely, various features that are described in the context of a single embodiment can also be implemented in multiple embodiments separately or in any suitable sub-combination.

Various modifications, adaptations to the foregoing example embodiments disclosed herein may become apparent to those skilled in the relevant arts in view of the foregoing description, when read in conjunction with the accompanying drawings. Any and all modifications will still fall within the scope of the non-limiting and example embodiments disclosed herein. Furthermore, other embodiments disclosed herein will come to mind to one skilled in the art to which these embodiments pertain having the benefit of the teachings presented in the foregoing descriptions and the drawings.

## Claims

1. A method of processing an audio signal, comprising:
receiving (410), at a current device (11), a control parameter from a remote device (12), the control parameter being generated based on a user input of the remote device and specifying a user preference for an audio signal to be transmitted to the remote device;
processing (420) the audio signal based on the received control parameter;
transmitting (430) the processed audio signal to the remote device;
**characterized in that** the method further comprises:
identifying, at the current device, a plurality of source directions in the audio signal;
capturing, at the current device, a video signal associated with the audio signal, the video signal including a video image of a plurality of speakers each corresponding to a respective source direction; and
transmitting the video signal and the identified source directions to the remote device, thereby allowing a user to select, by a user input of the remote device, a source direction of interest (25) from the identified source directions by indicating a speaker of interest from the plurality of speakers in the video image,
wherein the control parameter specifies at least said source direction of interest (25) corresponding to the indicated speaker.

2. The method according to claim 1, and wherein processing (420) the audio signal based on the control parameter comprises:
processing the audio signal by enhancing audio quality of the audio signal in the source direction of interest (25) relative to other identified source directions.

3. The method according to claim 1, further comprising:
receiving a further control parameter from a further remote device (13), the further control parameter being generated based on a user input of the further remote device and specifying a further user preference for the audio signal, and
wherein processing (420) the audio signal based on the control parameter comprises processing the audio signal based on the control parameter and the further control parameter to obtain a processed audio signal, and
wherein transmitting (430) the processed audio signal to the remote device comprises transmitting the processed audio signal to the remote device (12) and the further remote device.

4. The method according to claim 1, further comprising:
receiving a further control parameter from a further remote device (13), the further control parameter being generated based on a user input of the further remote device and specifying a further user preference for the audio signal;
processing the audio signal based on the further control parameter to obtain a further processed audio signal; and
transmitting the further processed audio signal to the further remote device (13).

5. The method according to any of claims 1 to 4, further comprising:
processing a video signal associated with the audio signal based on the control parameter; and
transmitting the processed video signal to the remote device.

6. A method of processing an audio signal, comprising:
generating (510), at a current device (12), a control parameter based on a user input of the current device, the control parameter specifying a user preference for an audio signal to be transmitted to the current device by a remote device (11);
transmitting (520) the control parameter to the remote device (11) for processing the audio signal;
receiving (530) the processed audio signal from the remote device;
**characterized in that** the method further comprises:
receiving, at the current device, a plurality of source directions identified in the audio signal by the remote device (11);
receiving, at the current device, a video signal associated with the audio signal, the video signal including a video image of a plurality of speakers each corresponding to a respective source direction;
allowing a user to provide a user input to select a source direction of interest (25) from the identified source directions, by indicating a speaker of interest from the plurality of speakers in the video image;
wherein the control parameter specifies said source direction of interest (25) corresponding to the indicated speaker.

7. The method according to claim 6, wherein the audio signal is processed in the remote device by enhancing audio quality of the audio signal in the source direction of interest (25) relative to other identified source directions.

8. The method according to any of claims 6 to 7, further comprising:
receiving a processed video signal associated with the audio signal from the remote device, the video signal being processed in the remote device based on the control parameter.

9. A device (11), comprising:
a receiver (114) configured to receive a control parameter from a remote device (12), the control parameter being generated based on a user input of the remote device and specifying a user preference for an audio signal to be transmitted to the remote device;
a processing unit (110) configured to process the audio signal based on the received control parameter;
a transmitter (112) configured to transmitting the processed audio signal to the remote device;
**characterized by**
a video capture device configured to capture a video signal associated with the audio signal, the video signal including a video image of a plurality of speakers each corresponding to a respective source direction;
wherein the processing unit (110) is further configured to identify a plurality of source directions in the audio signal, and
wherein the transmitter (112) is further configured to transmit the video signal and the identified source directions to the remote device, thereby allowing a user to select, by a user input of the remote device (12), a source direction of interest (25) from the identified source directions by indicating a speaker of interest from the plurality of speakers in the video image, and
wherein the control parameter specifies said source direction of interest (25) corresponding to the indicated speaker.

10. The device (11) according to claim 9,
wherein the processing unit (110) is further configured to process the audio signal by enhancing audio quality of the audio signal in the source direction of interest relative to other identified source directions.

11. The device (11) according to any of claims 9 to 10, wherein the receiver (114) is further configured to receive a further control parameter from a further remote device (13), the further control parameter being generated based on a user input of the further remote device and specifying a further user preference for the audio signal, and
wherein the processing unit (110) is further configured to process the audio signal based on the control parameter and the further control parameter to obtain a processed audio signal, and
wherein the transmitter (112) is further configured to transmit the processed audio signal to the remote device (12) and the further remote device (13).

12. The device (11) according to any of claims 9 to 11, wherein the receiver (114) is further configured to receive a further control parameter from a further remote device (13), the further control parameter being generated based on a user input of the further remote device and specifying a further user preference for the audio signal, and
wherein the processing unit (110) is further configured to process the audio signal based on the further control parameter to obtain a further processed audio signal, and
wherein the transmitter (112) is further configured to transmit the further processed audio signal to the further remote device (13).

13. A device (12), comprising:
a parameter generator (120) configured to generate a control parameter based on a user input of the device, the control parameter specifying a user preference for an audio signal to be transmitted to the device by a remote device (11);
a transmitter (112) configured to transmit the control parameter to the remote device (11) for processing the audio signal;
a receiver (124) configured to receive the processed audio signal from the remote device;
**characterized in that** the receiver (124) is further configured to receive a plurality of source directions identified in the audio signal by the remote device (11) and a video signal associated with the audio signal, the video signal including a video image of a plurality of speakers each corresponding to a respective source direction, and
a GUI for allowing a user to provide a user input to select a source direction of interest (25) from the identified source directions, by indicating a speaker of interest from the plurality of speakers in the video image.

14. The device according to claim 13, wherein the audio signal is processed in the remote device (11) by enhancing audio quality of the audio signal in the source direction of interest relative to other identified source directions.

15. A computer program product of processing an audio signal, comprising a computer program tangibly embodied on a machine readable medium, the computer program containing program code which, when the computer program is executed by a computer, causes the computer to carry out the method of any one of claims 1 to 8.

## Patentansprüche

1. Verfahren zum Verarbeiten eines Audiosignals, umfassend:
Empfangen (410), an einer Stromvorrichtung (11), eines Steuerungsparameters von einer entfernten Vorrichtung (12), wobei der Steuerungsparameter auf Grundlage einer Benutzereingabe der entfernten Vorrichtung erzeugt wird und eine Benutzerpräferenz für ein an die entfernte Vorrichtung zu sendendes Audiosignal spezifiziert;
Verarbeiten (420) des Audiosignals auf Grundlage des empfangenen Steuerungsparameters;
Senden (430) des verarbeiteten Audiosignals an die entfernte Vorrichtung;
**dadurch gekennzeichnet, dass** das Verfahren weiter umfasst:
Identifizieren, an der Stromvorrichtung, einer Vielzahl von Quellenrichtungen im Audiosignal;
Erfassen, an der Stromvorrichtung, eines mit dem Audiosignal assoziierten Videosignals, wobei das Videosignal ein Videobild einer Vielzahl von Sprechen beinhaltet, die je einer jeweiligen Quellenrichtung entsprechen; und
Senden des Videosignals und der identifizierten Quellenrichtungen an die entfernte Vorrichtung, wodurch einem Benutzer erlaubt wird, durch eine Benutzereingabe der entfernten Vorrichtung eine interessierende Quellenrichtung (25) aus den identifizierten Quellenrichtungen durch Angeben eines interessierenden Sprechers aus der Vielzahl von Sprechern im Videobild auszuwählen,
wobei der Steuerungsparameter mindestens eine interessierende Quellenrichtung (25), die dem angegebenen Sprecher entspricht, spezifiziert.

2. Verfahren nach Anspruch 1, und wobei Verarbeiten (420) des Audiosignals auf Grundlage des Steuerungsparameters umfasst:
Verarbeiten des Audiosignals durch Verbessern der Audioqualität des Audiosignals in der interessierenden Quellenrichtung (25) in Bezug auf andere identifizierte Quellenrichtungen.

3. Verfahren nach Anspruch 1, weiter umfassend:
Empfangen eines weiteren Steuerungsparameters von einer weiteren entfernten Vorrichtung (13), wobei der weitere Steuerungsparameter auf Grundlage einer Benutzereingabe der weiteren entfernten Vorrichtung erzeugt wird und eine weitere Benutzerpräferenz für das Audiosignal angibt, und
wobei Verarbeiten (420) des Audiosignals auf Grundlage des empfangenen Steuerungsparameters Verarbeiten des Audiosignals auf Grundlage des Steuerungsparameters und des weiteren Steuerungsparameters zum Erhalten eines verarbeiteten Audiosignals umfasst, und
wobei Senden (430) des verarbeiteten Audiosignals an die entfernte Vorrichtung Senden des verarbeiteten Audiosignals an die entfernte Vorrichtung (12) und die weitere entfernte Vorrichtung umfasst.

4. Verfahren nach Anspruch 1, weiter umfassend:
Empfangen eines weiteren Steuerungsparameters von einer weiteren entfernten Vorrichtung (13), wobei der weitere Steuerungsparameter auf Grundlage einer Benutzereingabe der weiteren entfernten Vorrichtung erzeugt wird und eine weitere Benutzerpräferenz für das Audiosignal spezifiziert;
Verarbeiten des Audiosignals auf Grundlage des weiteren empfangenen Steuerungsparameters zum Erhalten eines weiteren verarbeiteten Audiosignals; und
Senden des weiteren verarbeiteten Audiosignals an die weitere entfernte Vorrichtung (13).

5. Verfahren nach einem der Ansprüche 1 bis 4, weiter umfassend:
Verarbeiten eines mit dem Audiosignal assoziierten Videosignals auf Grundlage des Steuerungsparameters; und
Senden des verarbeiteten Videosignals an die entfernte Vorrichtung.

6. Verfahren zum Verarbeiten eines Audiosignals, umfassend:
Erzeugen (510), an einer Stromvorrichtung (12), eines Steuerungsparameters auf Grundlage einer Benutzereingabe der Stromvorrichtung, wobei der Steuerungsparameter eine Benutzerpräferenz für ein Audiosignal spezifiziert, das von einer entfernten Vorrichtung (11) an die Stromvorrichtung zu senden ist;
Senden (520) des Steuerungsparameters an die entfernte Vorrichtung (11) zum Verarbeiten des Audiosignals;
Empfangen (530) des verarbeiteten Audiosignals von der entfernten Vorrichtung;
**dadurch gekennzeichnet, dass** das Verfahren weiter umfasst:
Empfangen, an der Stromvorrichtung, einer Vielzahl von Quellenrichtungen, die im Audiosignal von der entfernten Vorrichtung (11) identifiziert werden;
Empfangen, an der Stromvorrichtung, eines mit dem Audiosignal assoziierten Videosignals, wobei das Videosignal ein Videobild einer Vielzahl von Sprechern beinhaltet, die je einer jeweiligen Quellenrichtung entsprechen;
einem Benutzer erlauben, eine Benutzereingabe zum Auswählen einer interessierenden Quellenrichtung (25) aus den identifizierten Quellenrichtungen durch Angeben eines interessierenden Sprechers aus der Vielzahl von Sprechern im Videobild bereitzustellen;
wobei der Steuerungsparameter die interessierende Quellenrichtung (25), die dem angegebenen Sprecher entspricht, spezifiziert.

7. Verfahren nach Anspruch 6, wobei das Audiosignal in der entfernten Vorrichtung durch Verbessern der Audioqualität des Audiosignals in der interessierenden Quellenrichtung (25) in Bezug auf andere identifizierte Quellenrichtungen verarbeitet wird.

8. Verfahren nach einem der Ansprüche 6 bis 7, weiter umfassend:
Empfangen eines mit dem Audiosignal assoziierten verarbeiteten Videosignals von der entfernten Vorrichtung, wobei das Videosignal in der entfernten Vorrichtung auf Grundlage des Steuerungsparameters verarbeitet wird.

9. Vorrichtung (11), umfassend:
einen Empfänger (114), der dazu konfiguriert ist, einen Steuerungsparameter von einer entfernten Vorrichtung (12) zu empfangen, wobei der Steuerungsparameter auf Grundlage einer Benutzereingabe der entfernten Vorrichtung erzeugt wird und eine Benutzerpräferenz für ein an die entfernte Vorrichtung zu sendendes Audiosignal spezifiziert;
eine Verarbeitungseinheit (110), die dazu konfiguriert ist, das Audiosignal auf Grundlage des empfangenen Steuerungsparameters zu verarbeiten;
einen Sender (112), der dazu konfiguriert ist, das verarbeitete Audiosignal an die entfernte Vorrichtung zu senden;
**gekennzeichnet durch**
eine Videoerfassungsvorrichtung, die dazu konfiguriert ist, ein mit dem Audiosignal assoziiertes Videosignal zu erfassen, wobei das Videosignal ein Videobild einer Vielzahl von Sprechern beinhaltet, die je einer jeweiligen Quellenrichtung entsprechen;
wobei die Verarbeitungseinheit (110) weiter dazu konfiguriert ist, eine Vielzahl von Quellenrichtungen im Audiosignal zu identifizieren, und
wobei der Sender (112) weiter dazu konfiguriert ist, das Videosignal und die identifizierten Quellenrichtungen an die entfernte Vorrichtung zu senden, wodurch einem Benutzer erlaubt wird, durch eine Benutzereingabe der entfernten Vorrichtung (12) eine interessierende Quellenrichtung (25) aus den identifizierten Quellenrichtungen durch Angeben eines interessierenden Sprechers aus der Vielzahl von Sprechern im Videobild auszuwählen, und
wobei der Steuerungsparameter die interessierende Quellenrichtung (25), die dem angegebenen Sprecher entspricht, spezifiziert.

10. Vorrichtung (11) nach Anspruch 9,
wobei die Verarbeitungseinheit (110) weiter dazu konfiguriert ist, das Audiosignal durch Verbessern der Audioqualität in der interessierenden Quellenrichtung in Bezug auf andere identifizierte Quellenrichtungen zu verarbeiten.

11. Vorrichtung (11) nach einem der Ansprüche 9 bis 10, wobei der Empfänger (114) weiter dazu konfiguriert ist, einen weiteren Steuerungsparameter von einer weiteren entfernten Vorrichtung (13) zu empfangen, wobei der weitere Steuerungsparameter auf Grundlage einer Benutzereingabe der weiteren entfernten Vorrichtung erzeugt wird und eine weitere Benutzerpräferenz für das Audiosignal spezifiziert, und
wobei die Verarbeitungseinheit (110) weiter dazu konfiguriert ist, das Audiosignal auf Grundlage des Steuerungsparameters und des weiteren Steuerungsparameters zum Erhalten eines verarbeiteten Audiosignals zu verarbeiten; und
wobei der Sender (112) weiter dazu konfiguriert ist, das verarbeitete Audiosignal an die entfernte Vorrichtung (12) und die weitere entfernte Vorrichtung (13) zu senden.

12. Vorrichtung (11) nach einem der Ansprüche 9 bis 11, wobei der Empfänger (114) weiter dazu konfiguriert ist, einen weiteren Steuerungsparameter von einer weiteren entfernten Vorrichtung (13) zu empfangen, wobei der weitere Steuerungsparameter auf Grundlage einer Benutzereingabe der weiteren entfernten Vorrichtung erzeugt wird und eine weitere Benutzerpräferenz für das Audiosignal spezifiziert, und
wobei die Verarbeitungseinheit (110) weiter dazu konfiguriert ist, das Audiosignal auf Grundlage des weiteren Steuerungsparameters zum Erhalten eines weiteren verarbeiteten Audiosignals zu verarbeiten, und
wobei der Sender (112) weiter dazu konfiguriert ist, das weitere verarbeitete Audiosignal an die weitere entfernte Vorrichtung (13) zu senden.

13. Vorrichtung (12), umfassend:
einen Parametererzeuger (120), der dazu konfiguriert ist, einen Steuerungsparameter auf Grundlage einer Benutzereingabe der entfernten Vorrichtung zu erzeugen, wobei der Steuerungsparameter eine Benutzerpräferenz für ein Audiosignal spezifiziert, das von einer entfernten Vorrichtung (11) an die Vorrichtung zu senden ist;
einen Sender (112), der dazu konfiguriert ist, den Steuerungsparameter an die entfernte Vorrichtung (11) zum Verarbeiten des Audiosignals zu senden;
einen Empfänger (124), der dazu konfiguriert ist, das verarbeitete Audiosignal von der entfernten Vorrichtung zu empfangen;
**dadurch gekennzeichnet, dass** der Empfänger (124) weiter dazu konfiguriert ist, eine Vielzahl von Quellenrichtungen, die im Audiosignal von der entfernten Vorrichtung (11) identifiziert werden, und ein mit dem Audiosignal assoziiertes Videosignal zu empfangen, wobei das Videosignal ein Videobild einer Vielzahl von Sprechern beinhaltet, die je einer jeweiligen Quellenrichtung entsprechen; und
eine GUI-Schnittstelle, um es einem Benutzer zu erlauben, eine Benutzereingabe zum Auswählen einer interessierenden Quellenrichtung (25) aus den identifizierten Quellenrichtungen durch Angeben eines interessierenden Sprechers aus der Vielzahl von Sprechern im Videobild bereitzustellen.

14. Vorrichtung nach Anspruch 13, wobei das Audiosignal in der entfernten Vorrichtung (11) durch Verbessern der Audioqualität des Audiosignals in der interessierenden Quellenrichtung in Bezug auf andere identifizierte Quellenrichtungen verarbeitet wird.

15. Computerprogrammprodukt des Verarbeitens eines Videosignals, umfassend ein Computerprogramm, das materiell in einem maschinenlesbaren Medium verkörpert ist, wobei das Computerprogramm Programmcode enthält, der, wenn das Computerprogramm von einem Computer ausgeführt wird, den Computer veranlasst, das Verfahren nach einem der Ansprüche 1 bis 8 durchzuführen.

## Revendications

1. Procédé de traitement d'un signal audio, comprenant les étapes consistant à :
recevoir (410), au niveau d'un dispositif actuel (11), un paramètre de commande depuis un dispositif distant (12), le paramètre de commande étant généré sur la base d'une entrée utilisateur du dispositif distant et spécifiant une préférence d'utilisateur pour un signal audio à transmettre au dispositif distant ;
traiter (420) le signal audio sur la base du paramètre de commande reçu ;
transmettre (430) le signal audio traité au dispositif distant ;
**caractérisé en ce que** le procédé comprend en outre les étapes consistant à :
identifier, au niveau du dispositif actuel, une pluralité de directions source dans le signal audio ;
capturer, au niveau du dispositif actuel, un signal vidéo associé au signal audio, le signal vidéo incluant une image vidéo d'une pluralité de haut-parleurs correspondant chacun à une direction source respective ; et
transmettre le signal vidéo et les directions source identifiées au dispositif distant, permettant ainsi à un utilisateur de sélectionner, par une entrée utilisateur du dispositif distant, une direction source d'intérêt (25) parmi les directions source identifiées en indiquant un haut-parleur d'intérêt parmi la pluralité de haut-parleurs dans l'image vidéo,
dans lequel le paramètre de commande spécifie au moins ladite direction source d'intérêt (25) correspondant au haut-parleur indiqué.

2. Procédé selon la revendication 1, et dans lequel l'étape consistant à traiter (420) le signal audio sur la base du paramètre de commande comprend l'étape consistant à :
traiter le signal audio en améliorant la qualité audio du signal audio dans la direction source d'intérêt (25) par rapport à d'autres directions source identifiées.

3. Procédé selon la revendication 1, comprenant en outre l'étape consistant à :
recevoir un autre paramètre de commande depuis un autre dispositif distant (13), l'autre paramètre de commande étant généré sur la base d'une entrée utilisateur de l'autre dispositif distant et spécifiant une autre préférence d'utilisateur pour le signal audio, et
dans lequel l'étape consistant à traiter (420) le signal audio sur la base du paramètre de commande comprend l'étape consistant à traiter le signal audio sur la base du paramètre de commande et de l'autre paramètre de commande pour obtenir un signal audio traité, et
dans lequel l'étape consistant à transmettre (430) le signal audio traité au dispositif distant comprend l'étape consistant à transmettre le signal audio traité au dispositif distant (12) et à l'autre dispositif distant.

4. Procédé selon la revendication 1, comprenant en outre les étapes consistant à :
recevoir un autre paramètre de commande depuis un autre dispositif distant (13), l'autre paramètre de commande étant généré sur la base d'une entrée utilisateur de l'autre dispositif distant et spécifiant une autre préférence d'utilisateur pour le signal audio ;
traiter le signal audio sur la base de l'autre paramètre de commande pour obtenir un autre signal audio traité ; et
transmettre l'autre signal audio traité à l'autre dispositif distant (13).

5. Procédé selon l'une quelconque des revendications 1 à 4, comprenant en outre les étapes consistant à :
traiter un signal vidéo associé au signal audio sur la base du paramètre de commande ; et
transmettre le signal vidéo traité au dispositif distant.

6. Procédé de traitement d'un signal audio, comprenant les étapes consistant à :
générer (510), au niveau d'un dispositif actuel (12), un paramètre de commande sur la base d'une entrée utilisateur du dispositif actuel, le paramètre de commande spécifiant une préférence d'utilisateur pour un signal audio à transmettre au dispositif actuel par un dispositif distant (11) ;
transmettre (520) le paramètre de commande au dispositif distant (11) pour traiter le signal audio ;
recevoir (530) le signal audio traité depuis le dispositif distant ;
**caractérisé en ce que** le procédé comprend en outre les étapes consistant à :
recevoir, au niveau du dispositif actuel, une pluralité de directions source identifiées dans le signal audio par le dispositif distant (11) ;
recevoir, au niveau du dispositif actuel, un signal vidéo associé au signal audio, le signal vidéo incluant une image vidéo d'une pluralité de haut-parleurs correspondant chacun à une direction source respective ;
permettre à un utilisateur de fournir une entrée utilisateur pour sélectionner une direction source d'intérêt (25) parmi les directions source identifiées, en indiquant un haut-parleur d'intérêt parmi la pluralité de haut-parleurs dans l'image vidéo ;
dans lequel le paramètre de commande spécifie ladite direction source d'intérêt (25) correspondant au haut-parleur indiqué.

7. Procédé selon la revendication 6, dans lequel le signal audio est traité dans le dispositif distant en améliorant la qualité audio du signal audio dans la direction source d'intérêt (25) par rapport à d'autres directions source identifiées.

8. Procédé selon l'une quelconque des revendications 6 à 7, comprenant en outre l'étape consistant à :
recevoir un signal vidéo traité associé au signal audio depuis le dispositif distant, le signal vidéo étant traité dans le dispositif distant sur la base du paramètre de commande.

9. Dispositif (11), comprenant :
un récepteur (114) configuré pour recevoir un paramètre de commande depuis un dispositif distant (12), le paramètre de commande étant généré sur la base d'une entrée utilisateur du dispositif distant et spécifiant une préférence d'utilisateur pour un signal audio à transmettre au dispositif distant ;
une unité de traitement (110) configurée pour traiter le signal audio sur la base du paramètre de commande reçu ;
un émetteur (112) configuré pour transmettre le signal audio traité au dispositif distant ;
**caractérisé par**
un dispositif de capture de vidéo configuré pour capturer un signal vidéo associé au signal audio, le signal vidéo incluant une image vidéo d'une pluralité de haut-parleurs correspondant chacun à une direction source respective ;
dans lequel l'unité de traitement (110) est en outre configurée pour identifier une pluralité de directions source dans le signal audio, et
dans lequel l'émetteur (112) est en outre configuré pour transmettre le signal vidéo et les directions source identifiées au dispositif distant, permettant ainsi à un utilisateur de sélectionner, par une entrée utilisateur du dispositif distant (12), une direction source d'intérêt (25) parmi les directions source identifiées en indiquant un haut-parleur d'intérêt parmi la pluralité de haut-parleurs dans l'image vidéo, et
dans lequel le paramètre de commande spécifie ladite direction source d'intérêt (25) correspondant au haut-parleur indiqué.

10. Dispositif (11) selon la revendication 9,
dans lequel l'unité de traitement (110) est en outre configurée pour traiter le signal audio en améliorant la qualité audio du signal audio dans la direction source d'intérêt par rapport à d'autres directions source identifiées.

11. Dispositif (11) selon l'une quelconque des revendications 9 à 10, dans lequel le récepteur (114) est en outre configuré pour recevoir un autre paramètre de commande depuis un autre dispositif distant (13), l'autre paramètre de commande étant généré sur la base d'une entrée utilisateur de l'autre dispositif distant et spécifiant une autre préférence d'utilisateur pour le signal audio, et
dans lequel l'unité de traitement (110) est en outre configurée pour traiter le signal audio sur la base du paramètre de commande et de l'autre paramètre de commande pour obtenir un signal audio traité, et
dans lequel l'émetteur (112) est en outre configuré pour transmettre le signal audio traité au dispositif distant (12) et à l'autre dispositif distant (13).

12. Dispositif (11) selon l'une quelconque des revendications 9 à 11, dans lequel le récepteur (114) est en outre configuré pour recevoir un autre paramètre de commande depuis un autre dispositif distant (13), l'autre paramètre de commande étant généré sur la base d'une entrée utilisateur de l'autre dispositif distant et spécifiant une autre préférence d'utilisateur pour le signal audio, et
dans lequel l'unité de traitement (110) est en outre configurée pour traiter le signal audio sur la base de l'autre paramètre de commande pour obtenir un autre signal audio traité, et
dans lequel l'émetteur (112) est en outre configuré pour transmettre l'autre signal audio traité à l'autre dispositif distant (13).

13. Dispositif (12), comprenant :
un générateur de paramètre (120) configuré pour générer un paramètre de commande sur la base d'une entrée utilisateur du dispositif, le paramètre de commande spécifiant une préférence d'utilisateur pour un signal audio à transmettre au dispositif par un dispositif distant (11) ;
un émetteur (112) configuré pour transmettre le paramètre de commande au dispositif distant (11) pour traiter le signal audio ;
un récepteur (124) configuré pour recevoir le signal audio traité depuis le dispositif distant ;
**caractérisé en ce que** le récepteur (124) est en outre configuré pour recevoir une pluralité de directions source identifiées dans le signal audio par le dispositif distant (11) et un signal vidéo associé au signal audio, le signal vidéo incluant une image vidéo d'une pluralité de haut-parleurs correspondant chacun à une direction source respective, et
une interface utilisateur graphique pour permettre à un utilisateur de fournir une entrée utilisateur pour sélectionner une direction source d'intérêt (25) parmi les directions source identifiées, en indiquant un haut-parleur d'intérêt parmi la pluralité de haut-parleurs dans l'image vidéo.

14. Dispositif selon la revendication 13, dans lequel le signal audio est traité dans le dispositif distant (11) en améliorant la qualité audio du signal audio dans la direction source d'intérêt par rapport à d'autres directions source identifiées.

15. Produit de programme informatique consistant à traiter un signal audio, comprenant un programme informatique incorporé tangiblement sur un support lisible par machine, le programme informatique contenant un code de programme qui, lorsque le programme informatique est exécuté par un ordinateur, amène l'ordinateur à exécuter le procédé selon l'une quelconque des revendications 1 à 8.
